# EUROPÄISCHE PATENTANMELDUNG

(11) **EP 0 713 718 A2**
(43) Veröffentlichungstag der Anmeldung: **29.05.1996**
(21) Anmeldenummer: 95116242.9
(22) Anmeldetag: 16.10.1995
(51) Int. Cl.: B01D 5/00, B01D 7/02, B01D 53/26

(54) **Verfahren zur Reinigung von Abluftströmen durch Kristallisation oder Kondensation aus der Dampfphase**

(30) Priorität: 31.10.1994 DE 4438874
(71) Anmelder: BAYER AG, 51368 Leverkusen (DE)
(72) Erfinder: Börger, Götz-Gerald, Dr., D-51519 Odenthal (DE); Kriwalski, Reiner, D-51373 Leverkusen (DE); Schmitt, Franz, D-51465 Bergisch Gladbach (DE)

(57) **Zusammenfassung**

Bei dem Verfahren zur kontinuierlichen Abscheidung einzelner Gaskomponenten aus einem Abluftstrom wird der Abluftstrom durch einen Führungskanal 6 geleitet, in dem in entgegengesetzter Richtung ein endloses Band 1 umläuft, wobei das Band 1 in einem als Kühlzone 8 ausgebildeten Teilabschnitt des Führungskanals 6 unter den Taupunkt oder unter den Sublimationspunkt der abzuscheidenden Gaskomponenten abgekühlt wird. Dadurch frieren diese Gaskomponenten auf dem Band 1 innerhalb einer Ausfrierzone 2 auf dem Band 1 als anhaftender Feststoff aus. Das Verfahren kann aber alternativ auch so durchgeführt werden, daß die abzuscheidenden Gaskomponenten auf dem Band 1 in der Ausfrierzone 2 auf dem gekühlten Band 1 lediglich auskondensieren. Im Eintrittsbereich des Abluftstromes in die Ausfrierzone 2 wird der anhaftende Feststoff oder die auskondensierte Flüssigkeit unter Abkühlung der eintretenden Abluft erwärmt. Sublimierte Dämpfe schmelzen dort. Die Flüssigkeiten laufen von dem Band ab und sammeln sich in einem Kondensatbehälter 14.

## Beschreibung

Die Erfindung betrifft ein Verfahren zur kontinuierlichen Abscheidung einzelner Gaskomponenten aus einem Abluftstrom durch Kristallisation oder Kondensation aus der Dampfphase. Auf diese Weise können Abluftströme gezielt von bestimmten Komponenten gereinigt werden, die dann problemlos entsorgt werden können.

Mit fortschreitendem Einsatz des produktionsintegrierten Umweltschutzes werden Abluftströme aus chemischen Produktionsbetrieben zwar einerseits immer kleiner; andererseits enthalten sie aber auch in vielen Fällen höhere Schadstoffkonzentrationen. Die Reinigung solcher Abluftströme ist auch beim Einsatz hochwertiger Arbeitsmedien wirtschaftlich, wenn die Investkosten gering gehalten werden können. Eine solche Möglichkeit bietet der Einsatz einer Kryo-Abscheidung aus einem Abluftstrom durch Kristallisation oder Kondensation aus der Dampfphase. Die Kristallisation aus der Dampfphase wird häufig auch als "Desublimation" bezeichnet. Die Tiefkältekondensation wird zur Abluftreinigung seit einigen Jahren von Flüssiggas-Herstellern propargiert. Zunächst wurden Wechselkühler-Systeme mit aufwendiger und schwer beherrschbarer Prozeßleittechnik eingesetzt. Neuerdings befinden sich verschiedene Varianten in Erprobung. So wird DE 4 134 293 ein sogenannter Kugel-Rutschbett-Apparat beschrieben, bei dem das abzuscheidende Gas an gekühlten Kugeln kondensiert wird. Der Apparat benötigt jedoch wegen der erforderlichen Schleusen und der Aufwärtsförderung der Kugeln eine relativ aufwendige Taktsteuerung und ein Becher-Förderwerk.

Ferner wird in DE 3 625 762 ein sogenanntes Schneeband beschrieben, das vor dem Eintritt von Luft in einen Schockgefrierapparat für Lebensmittel eingesetzt wird und den Zweck hat, die eintretende Luft zu entfeuchten, um Eisansätze im Inneren des Apparates zu verhindern. Die Wirkung beruht darauf, daß ein tiefgekühltes Filterband von der zu entfeuchtenden Umgebungsluft durchströmt wird. Dabei friert das Wasser im Filterband aus und wird in einer wärmeren Zone kontinuierlich abgetaut.

Das Hauptproblem bei der Gas- bzw. Dampfabscheidung mit Hilfe der Tieftemperatur-Kondensation/Sublimation ist das Zufrieren der Apparatur. Dieses Problem stellt sich insbesondere bei der Abscheidung von Wasserdampf unter Bildung von Wassereis. Der Erfindung lag daher die Aufgabe zugrunde, ein Verfahren zu entwickeln, das einen zuverlässigen Betrieb ohne häufige personalkostenintensive Unterbrechungen, bedingt durch Wartungs- und Servicearbeiten, ermöglicht. Bei diesem Verfahren sollen insbesondere kontinuierlich bestimmte Gaskomponenten oder Dämpfe aus der Abluft ausgefroren werden, wobei der Kühlmittelverbrauch möglichst gering sein soll und ein Zufrieren der Abluftleitung verhindert wird.

Diese Aufgabe wird erfindungsgemäß dadurch gelöst, daß der zu behandelnde Abluftstrom durch einen Führungskanal geleitet wird, in dem in entgegengesetzter Richtung ein endloses Band umläuft, das in einem als Kühlzone ausgebildeten Teilabschnitt des Führungskanals unter den Taupunkt oder unter den Sublimationspunkt der abzuscheidenden Gaskomponenten abgekühlt wird, daß diese Gaskomponenten in einer Ausfrierzone auf dem Band als anhaftender Feststoff ausfrieren oder als das Band benetzende Flüssigkeit auskondensieren, und daß der anhaftende Feststoff oder die kondensierte Flüssigkeit außerhalb der Kühlzohne und der Kondensations-Sublimationszone von dem Band entfernt wird.

Als Kühlmittel wird in der Kühlzone zweckmäßig ein gasförmiges oder verdampfendes flüssiges Kältemittel verwendet.

Der am Band anhaftende Feststoff wird vorzugsweise durch Aufschmelzen und anschließendes Abfließen aus dem warmen Teil der Kondensations-Sublimationszone von dem Band entfernt.

Besonders vorteilhaft wird das Band außerhalb der Kühlzone und außerhalb der Kondensations-Sublimationszone durch ein Tauchbad geführt, in dem sich die kondensierte Flüssigkeit sammelt und aus dem sie dann in einem getrennten Schritt problemlos entsorgt werden kann. Ist die abzuscheidende Gaskomponente als Feststoff auf dem Band ausgefroren, so kann sie in vorteilhafter Weise ebenfalls mittels des Tauchbades entfernt werden. In diesem Fall muß das Tauchbad auf einer so hohen Temperatur gehalten werden, daß der auf dem Band transportierte ausgefrorene Feststoff auftaut und sich in flüssiger Phase im Tauchbad sammelt.

Das Band besteht vorteilhaft aus einer mit Zahnrädern angetriebenen Kette. Alternativ kann aber auch ein Faserband aus gasdurchlässigem Gewebe, Vlies oder Filz verwendet werden.

Um nach dem Durchlaufen des Tauchbades noch anhaftende Restflüssigkeit zu entfernen, wird vorteilhaft ein Teilstrom des behandelten (gereinigten) Gases oder ein anderes trockenes Gas im Anschluß an das Tauchbad in einem Trocknungsrohr an dem Band vorbei geleitet. Das mit Feuchtigkeit beladene Gas kann danach in vorteilhafter Weise durch eine in der Rohgaszuführung angeordnete Injektorpumpe abgesaugt werden.

Die Trocknung kann aber auch durch eine konventionelle elektrische Heizung unterstützt werden.

Gemäß einer bevorzugten Ausführungsform fungiert das Tauchbad als eine hydraulische Sperre, die den Führungskanal vom Trocknungsrohr hydraulisch abschließt.

Um Eisablagerungen im Führungskanal zu entfernen, können Abstreifer an den Kettengliedern vorgesehen werden.

Gemäß einer Weiterentwicklung wird das behandelte (gereinigte) Gas in Bewegungsrichtung des Gases gesehen nach der Kondensations-Sublimationszone aus dem Führungskanal durch ein Reingasrohr abgeführt und außerdem ein Teil des verdampften flüssigen Kühlmittels nach dem Durchströmen eines oberhalb der Kühlkammer angeordneten Kettenhüllrohrs in den Führungskanal eingespeist, um von dort aus das Trocknungsrohr zu durchströmen, während ein anderer Teil des verdampften flüssigen Kühlmittels den Führungskanal von derselben Einspeisstelle aus in entgegengesetzter Richtung durch die Kühlzone bis zum Reingasrohr durchströmt.

Auf der Grundlage des erfindungsgemäßen Verfahrens läßt sich ein relativ einfacher, störungsfrei arbeitender Kondensations-, Sublimations-Apparat realisieren, bei dem auch das Problem des Zufrierens ohne großen Aufwand gelöst wird. Ein weiterer Vorteil besteht darin, daß es sich um ein vollkontinuierliches Verfahren handelt, das ohne taktweise umzuschaltende und evtl. störanfällige Schleusen auskommt.

Im folgenden werden Ausführungsbeispiele der Erfindung anhand von Zeichnungen näher beschrieben.

Es zeigen:
Fig. 1 die schematische Ansicht einer Apparatur zur Durchführung des erfindungsgemäßen Verfahrens und
Fig. 2 eine besonders vereisungssichere Variante dieser Apparatur.

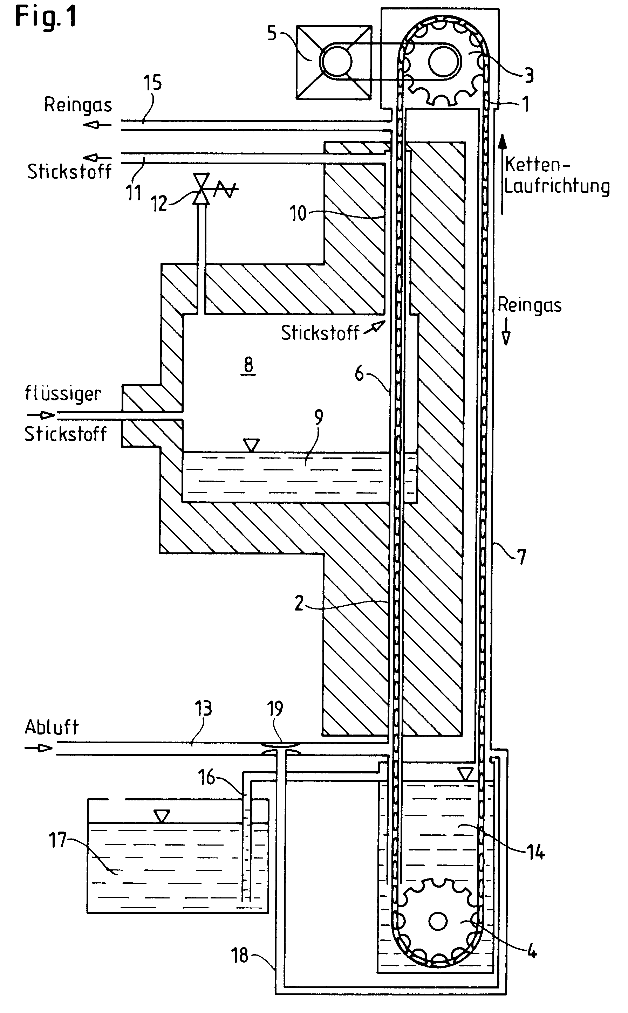

Die Vorrichtung zur Kryo-Abscheidung von Gasen gemäß Fig. 1 besteht im wesentlichen aus einem umlaufenden Band oder einer umlaufenden Kette 1, die durch eine Kühlkammer 8 und anschließend durch eine Kondensations-Sublimationszone 2 geführt wird. Die Kette 1 wird durch die Zahnräder 3 und 4 umgelenkt und von einem Motor 5 im Gegenuhrzeigersinn angetrieben. In einem vor der Kühlkammer liegenden Abschnitt (in Bewegungsrichtung der Kette gesehen), sowie in der Kühlkammer 8 und in einem nach der Kühlkammer 8 liegenden Teil, der hier als Ausfrierzone 2 bezeichnet wird, wird die Kette 1 durch einen gut isolierten Führungskanal 6 und auf der gegenüberliegenden Seite (außerhalb der Kühlkammer 8 und außerhalb der Ausfrierzone 2) durch ein Trocknungsrohr 7 geführt. In der Kühlkammer 8 befindet sich ein Flüssig-Stickstoffreservoir 9. Der Führungskanal 6 steht in der Kühlkammer 8 direkt mit dem flüssigen Stickstoff in Kontakt, so daß hier eine besonders starke Kühlung der Kette 1 stattfindet. Am Einlauf der Kette 1 in die Kühlkammer 8 ist ein den Führungskanal 6 konzentrisch umschließendes Hüllrohr 10 angeordnet. Zwischen dem Hüllrohr 10 und dem Führungskanal 6 verbleibt ein Ringspalt, durch den verdampfter flüssiger Stickstoff aus der Kühlkammer 8 entweichen kann. Auf diese Weise bildet das Hüllrohr 10 eine Vorkühlzone, in der die Kette 1 Wärme durch die Wand des Führungskanals 6 an den gasförmigen Stickstoff abgibt. Das Hüllrohr 10 ist an seinem oberen Ende an einen Austrittsstutzen 11 angeschlossen, durch den der verdampfte Stickstoff abgeführt und gegebenenfalls wieder verwendet wird. Ein vereisungssicheres Sicherheitsventil 12 schützt die Kühlkammer 8 vor unzulässig hohen Drücken, falls die Ableitung des verdampften Stickstoffs durch das Hüllrohr 10 blockiert sein sollte.

Am unteren Ende der Kondensations-Sublimationszone 2 ist der Führungskanal 6 mit einem Anschlußstutzen 13 für den zu reinigenden Abluftstrom versehen. Die zugeführte Abluft strömt im Führungskanal 6 durch die Ausfrierzone 2 entgegen der Laufrichtung der Kette 1. Die Kette 1 wird im Bereich des Flüssigstickstoffreservoirs 9, das die eigentliche Kühlzone bildet, indirekt tiefgekühlt und bewirkt dadurch auf ihrem weiteren Weg entgegen dem Abluftstrom, d.h. in dem auf die Kühlzone folgenden Abschnitt der Ausfrierzone 2, daß Abluftinhaltstoffe auf der Kette festfrieren, da die Kette zwischen dem Flüssigstickstoffreservoir 9 und dem Ablufteintritt 13 kälter als der Führungskanal 6 ist. Im weiteren Verlauf der Ausfrierzone 2 erwärmt sich die Kette 1 im Führungskanal 6 mit zunehmender Entfernung von der Kühlzone allmählich wieder, so daß die auf der Kette festgefrorenen Abluftinhaltsstoffe wieder auftauen. Die aufgeschmolzenen Abluftinhaltsstoffe laufen dann an der Kette 1 ab und sammeln sich in einem unterhalb der Ausfrierzone 2 angeordneten Tauchbad 14, das auch das Umlenkzahnrad 4 einschließt. Der Ablufteintrittsstutzen 13 ist zwischen Ausfrierzone 2 und Tauchbad 14 angeschlossen. Das gereinigte Gas kann durch den oberhalb der Kühlkammer 8 und des Hüllrohres 10 an den Führungskanal 6 angeschlossenen Austrittsstutzen 15 abströmen.

Das Tauchbad 14 kann auch beheizt werden (z.B. durch eine elektrische Heizung), wenn die Erwärmung im Führungskanal 6 unterhalb der Kühlkammer 8 nicht ausreicht, um die ausgefrorenen Abluftinhaltsstoffe auf der Kette 1 wieder aufzutauen und wieder aufzuschmelzen. Das Kryo-Abscheidungsverfahren ist auch für solche Abluftinhaltsstoffe geeignet, die bei den hier erreichbaren Kühltemperaturen lediglich auf der Kette 1 auskondensieren. In diesem Fall wird nur der Taupunkt, nicht aber der Erstarrungspunkt oder Sublimationspunkt des abzuscheidenden Gases unterschritten. Die kondensierte Flüssigkeit kann sich wieder, wie zuvor beschrieben, im Tauchbad 14 sammeln. Das Tauchbad 14 steht über einem Kondensatablauf 16 mit einem Sammelbehälter 17 in Verbindung.

Bei geeigneter Abstimmung der Wärmekapazitätsströme von Abluft und Kette kann die örtliche Temperaturdifferenz zwischen den beiden immer gering gehalten werden. Dadurch wird Aerosolbildung unterdrückt.

Nach dem Durchlaufen des Tauchbades 14 tritt die Kette 1 in das Trocknungsrohr 7 ein. Im Trocknungsrohr 7, das z.B. elektrisch beheizt werden kann, wird die auf der Kette 1 befindliche, aus dem Tauchbad 14 stammende, Restflüssigkeit abgetrocknet. Eine konvektive Trocknung der Kette 1 im Trocknungsrohr 7 kann dadurch erfolgen, daß ein Teil des gereinigten Abluftstromes oder auch ein Teil des aus der Kühlkammer 8 verdampften Stickstoffs durch das Führungsrohr 7 abgesaugt wird. Zu diesem Zweck ist das Führungsrohr 7 über eine Verbindungsleitung 18 mit einer in dem Ablufteintrittsstutzen 13 angeordneten Injektorpumpe 19 verbunden. Auf diese Weise wird verhindert, daß die Kette 1 auf ihrem Rückweg Abluftinhaltstoffe auf die Reingasseite verschleppt. Im Kühlteil oberhalb der Kühlkammer 8 kühlt die durch den Führungskanal 6 der Kette 1 entgegenströmende gereinigte Abluft die Kette vor und erwärmt sich dabei. Die Injektorpumpe 19 im Ablufteintrittsstutzen 13 kann z.B. aus einer Venturi-Kehle bestehen. Falls zur Trocknung im Trocknungsrohr 7 nicht das gereinigte Gas, sondern verdampfter flüssiger Stickstoff verwendet werden soll, kann die Injektorpumpe 19 entfallen.

Um eventuelle auftretende Eisablagerungen von der Innenwand des Führungskanals 6 abzureinigen, können in regelmäßigen Abständen Abstreifbügel auf den Kettengliedern befestigt werden. Anstelle einer Kette kann auch ein Faserband aus gasdurchlässigem Gewebe, Flies oder Filz oder ein irgendwie geartetes, über einen Antrieb transportierbares Band eingesetzt werden.

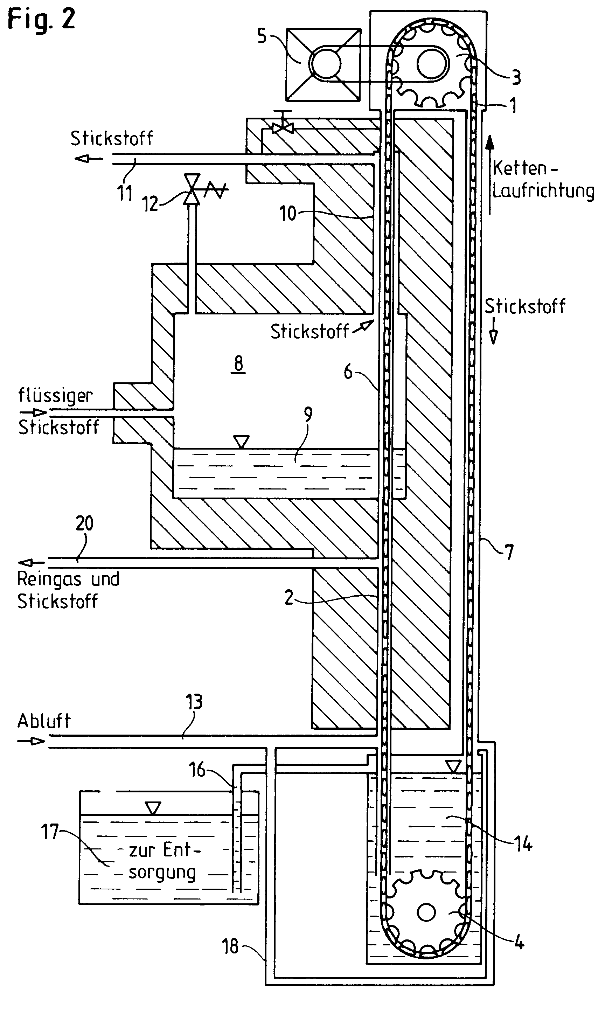

Gemäß einer alternativen Ausführungsform, die in Fig. 2 dargestellt ist, wird auf eine Trocknung der zurücKlaufenden Kette 1 und eine Reinluftrückführung verzichtet und statt dessen die Reinluft schon unterhalb der Kühlkammer 8 durch den Reinluftstutzen 20 entnommen. Die Kette 1 wird dann oberhalb der Kühlkammer 8 durch den verdampften Stickstoff indirekt vorgekühlt. Ein Kleiner Teilstrom des verdampften Stickstoffs wird in das Führungsrohr 6 eingeleitet und verhindert, daß dort Dämpfe enthaltendes Gas in das Führungsrohr 6 im Bereich der Kühlkammer 8 oder darüber eindringen und die Innenwand des Führungsrohres 6 mit ausgefrorenem Material belegen kann. Bei dieser Ausführung kommt das gereinigte Gas nur mit der tiefgefrorenen Kette 1 in Kontakt und es ist ohne Einfluß, ob der Kette noch Kondensat anhaftet oder nicht. Ein Stickstoffteilstrom wird analog zur Ausführung von Fig. 1 durch das Trocknungsrohr 7 geführt und über die Verbindungsleitung 8 mit in den Ablufteintrittsstutzen 13 eingespeist. Das bei dieser Ausführung ebenfalls vorhandene Tauchbad 14 wirkt, analog zu der zuvor beschriebenen Ausführung gemäß Fig. 1, als hydraulische Sperre zwischen Führungskanal 6 in der Ausfrierzone 2 und dem Trocknungsrohr 7 auf der gegenüberliegenden Seite (Kettenrückweg).

Das erfindungsgemäße Verfahren bietet den Vorteil einer relativ einfachen kostengünstigen apparativen Lösung zur Reinigung von relativ Kleinen Abgasströmen bis 10 m³/h. Eine entsprechend größer dimensionierte Anlage arbeitet jedoch auch noch bei größeren Abgasströmen mit ausreichender Wirtschaftlichkeit.

## Patentansprüche

1. Verfahren zur kontinuierlichen Abscheidung einzelner Gaskomponenten aus einem Abluftstrom durch Kristallisation oder Kondensation aus der Dampfphase, dadurch gekennzeichnet
a) daß der zu behandelnden Abluftstrom durch einen Führungskanal (6) geleitet wird, in dem in entgegengesetzter Richtung ein endloses Band (1) umläuft,
b) daß das Band (1) in einem als Kühlzone (8) ausgebildeten Teilabschnitt des Führungskanals (6) unter den Taupunkt oder unter den Sublimationspunkt der abzuscheidenden Gaskomponenten abgekühlt wird,
c) daß diese Gaskomponenten auf dem Band (1) in einer Ausfrierzone (2) auf dem Band (1) als anhaftender Feststoff ausfrieren oder als das Band (1) benetzende Flüssigkeit auskondensieren,
d) und daß der anhaftende Feststoff oder die kondensierte Flüssigkeit außerhalb der Kühlzone (8) und der Ausfrierzone (2) von dem Band (1) entfernt wird.

2. Verfahren nach Anspruch 1, dadurch gekennzeichnet, daß als Kühlmittel in der Kühlzone (8) ein gasförmiges oder verdampfendes flüssiges Kältemittel verwendet wird.

3. Verfahren nach Anspruch 1 - 2, dadurch gekennzeichnet, daß der am Band anhaftende Feststoff durch Aufschmelzen und anschließendes Abfließen aus dem warmen Teil der Ausfrierzone (2) von dem Band (1) entfernt wird.

4. Verfahren nach Anspruch 1 - 3, dadurch gekennzeichnet, daß das Band (1) außerhalb der Kühlzone (8) und außerhalb der Ausfrierzone (2) durch ein Tauchbad (14) geführt wird, in dem sich die kondensierte Flüssigkeit sammelt und dann getrennt entsorgt wird.

5. Verfahren nach Anspruch 3 und 4, dadurch gekennzeichnet, daß das Tauchbad (14) auf einer so hohen Temperatur gehalten wird, daß der auf dem Band (1) vorhandene ausgefrorene Festoff auftaut und sich in flüssiger Phase im Tauchbad (14) sammelt.

6. Verfahren nach Anspruch 1 - 5, dadurch gekennzeichnet, daß als Band (1) eine mit Zahnrädern (3,4) angetriebene Kette (1) verwendet wird.

7. Verfahren nach Anspruch 1 - 5, dadurch gekennzeichnet, daß als Band (1) ein Faserband aus gasdurchlässigem Gewebe, Vlies oder Filz verwendet wird.

8. Verfahren nach Anspruch 1 - 7, dadurch gekennzeichnet, daß ein Teilstrom des behandelten (gereinigten) Gases oder trockenes Inertgas im Anschluß an das Tauchbad (14) in einem Trocknungsrohr (7) an dem Band (1) vorbeigeleitet wird, um anhaftende Restflüssigkeit abzutrocknen.

9. Verfahren nach Anspruch 8, dadurch gekennzeichnet, daß das Trocknungsgas aus dem Trocknungsrohr (7) durch eine in der Rohgaszuführung (13) angeordnete Injektorpumpe (19) abgesaugt wird.

10. Verfahren nach Anspruch 1 - 9, dadurch gekenzeichnet, daß die Restflüssigkeit im Anschluß an das Tauchbad (14) durch eine elektrische Heizung von dem Band (1) abgetrocknet wird.

11. Verfahren nach Anspruch 1 - 10, dadurch gekennzeichnet, daß das Tauchbad (14) den Führungskanal (6) vom Trocknungsrohr (7) hydraulisch abschließt.

12. Verfahren nach Anspruch 6 - 11, dadurch gekennzeichnet, daß Eisablagerungen an dem Führungskanal (6) durch Abstreifer an den Kettengliedern entfernt werden.

13. Verfahren nach Anspruch 1 - 12, dadurch gekennzeichnet, daß das behandelte (gereinigte Gas) in Bewegungsrichtung des Bandes (1) gesehen vor der Ausfrierzone (2) durch ein Reingasrohr (20) aus dem Führungskanal (6) abgeführt wird und ein Teil des verdampften flüssigen Kühlmittels nach dem Durchströmen eines oberhalb der Kühlkammer (8) angeordneten Hüllrohrs (10) in den Führungskanal (6) eingespeist wird, um von dort aus das Trocknungsrohr (7) zu durchströmen, während ein anderer Teil des verdampften flüssigen Kühlmittels den Führungskanal (6) von derselben Einspeisstelle aus in entgegengesetzter Richtung durch die Kühlzone (8) bis zum Reingasrohr (20) durchströmt.
